# EUROPÄISCHE PATENTSCHRIFT

(11) **EP 3 693 296 B1**
(45) Veröffentlichungstag und Bekanntmachung des Hinweises auf die Patenterteilung: **16.08.2023**
(21) Anmeldenummer: 20156546.2
(22) Anmeldetag: 05.07.2012
(51) Int. Cl.: B65G 17/40

(54) **MEHRGLIEDRIGER FÖRDERGURT MIT LAUFROLLEN**
MULTI-PART CONVEYOR BELT WITH ROLLERS
COURROIE TRANSPORTEUSE À PLUSIEURS ÉLÉMENTS À ROULEAUX

(30) Priorität: 05.06.2012 DE 102012104891
(43) Veröffentlichungstag der Anmeldung: 12.08.2020
(62) Teilanmeldung aus: 12738419.6
(73) Patentinhaber: Krones Aktiengesellschaft, 93073 Neutraubling (DE)
(72) Erfinder: KÄS, Roland, 93073 Neutraubling (DE)
(74) Vertreter: Benninger, Johannes

(56) Entgegenhaltungen:
- DE-A1- 2 712 248
- US-A- 4 274 536
- US-A1- 2007 039 805

## Beschreibung

Die vorliegende Erfindung betrifft einen mehrgliedrigen Fördergurt mit Laufrollen, der die Merkmale des Oberbegriffes des unabhängigen Anspruchs aufweist.

Zum Transport von Artikeln, Gebinden und Packgütern werden Horizontalfördereinrichtungen in zahlreichen Ausführungsvarianten eingesetzt. Eine häufige Ausführungsvariante solcher Horizontalfördereinrichtungen umfasst sog. Gliederbandförderer oder Förderketten, die Förderabschnitte mit Auflageebenen für die Fördergüter bieten. Mehrere solcher Förderabschnitte können aneinandergrenzen, wobei die Gliederbandförderer oder Förderketten, die aus einer Vielzahl gelenkig miteinander verbundener Ketten- oder Bandglieder gebildet sind, zumindest in vertikaler Richtung umgelenkt werden, um als endlos umlaufendes Zugmittel eingesetzt werden zu können. Für eine universelle Einsatzmöglichkeit dieser Bänder oder Ketten sind mehrere Aspekte wichtig, so u.a. ihre ausreichende Beweglichkeit, um eine Umlenkung um horizontal rotierende Umlenkrollen oder -räder mit nicht zu großem Umlenkradius zu ermöglichen. Andererseits müssen die Ketten eine gewisse Rückbiegung ermöglichen, bei der die Förderkette in Bezug auf ihre Förderoberfläche konkav gebogen wird, da je nach den vorgegebenen Einbauverhältnissen manche Mehrfachumlenkungen eine solche Rückbiegung erfordern. Nicht zuletzt sollten die Gliederbandförderer oder Förderketten eine möglichst flache und gleichmäßige Auflageebene aufweisen, um Artikel mit kleineren Aufstandsflächen kippsicher transportieren zu können.

Für viele Anwendungsfälle ist eine rutschhemmende oder auch glatte Oberfläche der Gliederbandförderer hinderlich, wenn die beförderten Artikel bspw. aufgestaut werden müssen. Um ein leichtes Gleiten der Artikel zu ermöglichen, können die Gliederbandförderer oder Förderketten Laufrollen oder Tragrollen an ihrer Förderebene aufweisen, auf denen sich die Artikel, Gebinde und Packgüter leicht in oder entgegen der Förderrichtung bewegen können. Zu diesem Zweck weisen diese Rollen jeweils horizontale Drehachsen auf, die quer zur Förderrichtung angeordnet sind. Normalerweise befinden sich die Laufrollen in einem gegenüber den tragenden Scharnierteilen und Kettengliedern erhöhten Niveau, so dass die Rollen eine weitgehend gleichmäßige Auflageebene bilden.

Einen mehrgliedrigen Fördergut nach dem Oberbegriff des Anspruchs 1 zeigt bspw. die US 2007/039805 A1 oder die DE 35 41 364 A1. Der dort offenbarte Gliederbandförderer umfasst eine Vielzahl von gelenkig miteinander verbundenen Traggliedern, die an ihren Oberseiten jeweils Lagerböcke zur Aufnahme von Achsen aufweisen, an denen Laufrollen gelagert sind.

Um bei aneinander anschließenden Förderabschnitten mit jeweils in Förderrichtung aufeinander folgenden Gliederbandförderern keine zu großen Lücken entstehen zu lassen, die zu erheblichen Förder- und Kippproblemen bei manchen beförderten Artikeln führen könnten, sind möglichst enge Umlenkradien bei den Führungen der Förderketten wünschenswert. Da allerdings die Gliederbandförderer entsprechend der in DE 35 41 364 A1 offenbarten Bauform mit oberseitig der Tragglieder angeordneten Laufrollen bei solchen engen Umlenkradien ausgeprägte Lücken zwischen den Laufrollen benachbarter Tragglieder entstehen lassen, entsteht ein in der Praxis nicht akzeptables Eingriffsrisiko bei manuellen Eingriffen in den Förderbereich des Gliederbandförderers. Die zwischen den Rollenreihen benachbarter Kettenglieder durch die engen Umlenkradien gebildeten relativ großen Spalten begründen ein Verletzungsrisiko durch Quetschen, sobald diese Spalten sich beim Übergang in den horizontalen Förderabschnitt wieder schließen, was zusätzliche Sicherungsmaßnahmen gegen manuelle Eingriffe unverzichtbar macht.

Die EP 1 752 395 B1 offenbart eine Förderkette mit gelenkig miteinander verbundenen Kettengliedern, die jeweils Doppelreihen mit Laufrollen tragen. Zwischen den Rollenreihen jedes Kettengliedes befinden sich zusätzliche Stützabschnitte, welche die Lücken zwischen den benachbarten Rollenreihen weitgehend schließen. Da jedoch solche Stützabschnitte zwischen aneinandergrenzenden Rollenreihen benachbarter Kettenglieder fehlen, ist kein Schutz gegen manuelle Eingriffe bei sich öffnenden Lücken einer über Umlenkrollen geführten Förderkette vorhanden.

Ein vorrangiges Ziel der vorliegenden Erfindung besteht darin, eine Gliederband- oder Förderkette mit einer durch Laufrollen gebildeten Auflageebene zur Verfügung zu stellen, die in Umlenkbereichen mit bezüglich der Auflageebene konvex gekrümmter Oberseite eine möglichst geringe Spaltbildung zwischen Auflageelementen und/oder Rollen benachbarter, gelenkig miteinander verbundener Einzelglieder zeigt, so dass ein effektiver Schutz gegen Verletzungen wie bspw. durch Quetschungen bei manuellen Eingriffen in den Förderbereich der Gliederband- oder Förderkette gegeben ist.

Dieses Ziel wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die Erfindung einen mehrgliedrigen Fördergurt zum Transport von Gegenständen wie Behälter, Flaschen, Gebinden, Packgüter o. dgl. vor, der aus einer Vielzahl von gelenkig miteinander verbundenen Gliedern gebildet ist. Jedes Glied des erfindungsgemäßen Fördergurtes weist einen länglichen Trägerabschnitt oder Träger auf, dessen Unterseite einen Tragabschnitt des Fördergurtes bildet und der zu beiden Längsseiten mindestens ein Gelenkauge, normalerweise jedoch mehrere parallele Gelenkaugen zur drehgelenkigen Verbindung zu benachbarten Gliedern aufweist. Die Gelenkaugen jeweils benachbarter, miteinander verbundener Glieder sind über jeweils wenigstens einen Gelenkbolzen, der durch die Gelenkaugen der beiden miteinander verbundenen Glieder durchgreift, derart verbunden, dass die benachbarten Glieder um den wenigstens einen Gelenkbolzen schwenkbar verbunden sind. Zudem weist jeder Träger eines Gliedes an seiner Oberseite wenigstens eine Reihe von drehbar gelagerten Auflagerollen auf, deren Drehachsen bzw. deren gemeinsame Drehachse parallel zu den Gelenkbolzen und zu den Längsseiten der Träger der Glieder liegen und die gemeinsam mit den Auflagerollen der benachbarten Glieder eine Auflagefläche für die zu transportierenden Gegenstände bilden.

Erfindungsgemäß sind im Bereich der Längsseiten der Glieder jeweils Abweiserelemente vorgesehen bzw. vorhanden, die sich zwischen den Höhenniveaus der Auflagerollen sowie der Oberseite der Träger und an wenigstens einer Seite der Auflagerollen erstrecken. Die Oberseiten der Träger der einzelnen Glieder des Fördergurtes bilden gleichzeitig ein hier so bezeichnetes Grundniveau, das sich erfindungsgemäß unterhalb der Erstreckungshöhe der Abweiserelemente befindet. Insbesondere erstrecken sich die Abweiserelemente zwischen einem obersten Niveau der Auflagerollen sowie dem Grundniveau der Oberseiten der Träger des jeweiligen Gliedes. Hierbei ist vorgesehen, dass die Abweiserelemente von zueinander weisenden Längsseiten aneinandergrenzender Glieder ineinandergreifen.

Die Abweiserelemente erlauben die Umlenkung des Fördergurtes mit relativ kleinen Biegeradien und schließen durch ihre besondere Formgebung die dabei entstehenden Lücken zwischen den Rollenreihen, so dass zwar weiterhin Spalten zwischen den Auflagerollen benachbarter Gurtglieder vorhanden sind. Allerdings sorgen die in die Spalten zwischen den Auflagerollen der benachbarten Gurtglieder hineinragenden bzw. eingreifenden Abweiserelemente auf effektive Weise dafür, dass die Spalttiefe deutlich reduziert ist. Dadurch kann die bisher bestehende Verletzungsgefahr durch Eingriffe zwischen die Glieder weitgehend ausgeschlossen werden. Gleichzeitig jedoch tragen die Abweiserelemente dazu bei, eine weitgehend ebene Auflagefläche auch im Randbereich einer beginnenden Umlenkung des Fördergurtes zu erhalten. Die Abweiserelemente lösen den bisher bestehenden Zielkonflikt, der in der Bildung möglichst kleiner Spalten bei gleichzeitig möglichst ebener Auflagefläche und einem möglichst engen Biegeradius bestand.

Bei einer Ausführungsvariante des Fördergurtes sind die Abweiserelemente jeweils durch hakenförmige Verlängerungen gebildet, die in einen Bereich zwischen benachbarten Gliedern und oberhalb des sog. "Grundniveaus" hineinreichen. Diese Abweiserelemente sind typischerweise jeweils am Grundkörper bzw. Träger eines Gliedes verankert. Wahlweise können die Abweiserelemente auch durch Verlängerungen von länglichen Scheiben gebildet sein, die gemeinsam mit einzelnen Laufrollen an deren Achsen gelagert bzw. befestigt sind. So können die Abweiserelemente bspw. jeweils durch Materialbrücken gebildet sein, die zwischen die Rollen hineinreichen und/oder dort verankert sind. Darüber hinaus können die Abweiserelemente jeweils mit Erhöhungen an den nach oben weisenden Rückseiten der hakenförmigen Verlängerungen versehen sein, so dass die bei der Umlenkung des Fördergurtes entstehenden Spalten zwischen den Laufrollenreihen benachbarter Gurtglieder noch besser geschlossen werden.

Um keine Querlücken oder -spalten entstehen zu lassen, sind die Abweiserelemente jeweils relativ eng voneinander beabstandet. Sie können insbesondere jeweils gleiche Teilungsabstände wie einzelne Rollen aufweisen. Die Abweiserelemente können ggf. jeweils in Lücken zwischen benachbarten Rollen eingreifen und/oder hineinragen.

Eine erste Ausführungsvariante des Fördergurtes kann vorsehen, dass jedes Glied an beiden Längsseiten jeweils Reihen von Abweiserelementen aufweist. Auch Kombinationen aus unterschiedlich gestalteten Gliedern sind denkbar.

Um eine möglichst gute Schutzwirkung gegen unbeabsichtigte Eingriffe zwischen benachbarte Gurtglieder und damit einher gehende Quetschungen zu bieten, können die Abweiserelemente von zueinander weisenden Längsseiten aneinander grenzender Glieder ineinander greifen, insbesondere durch eine sich abwechselnde Reihung der Abweiser, die jeweils an den benachbarten Gurtgliedern verankert sind.

Gemäß einer Ausführungsform der Erfindung ist vorgesehen, dass die nach oben weisende Seiten von hakenförmig ausgebildeten Abweiserelementen jeweils konvex gekrümmt sind, damit im Betrieb des Fördergurtes keine scharfen Kanten gebildet werden, wenn die Abweiserelemente bei umgelenktem Fördergurt und den dadurch entstehenden größeren Spalten zwischen den Auflagerollen benachbarter Glieder ineinander greifen.

Gemäß einer weiteren Ausführungsform der Erfindung ist vorgesehen, dass die Oberseiten der jeweils versetzt zueinander angeordneten, ineinandergreifenden Abweiserelemente eine näherungsweise zylindersegmentförmige Kontur bilden. Dadurch wird die Spalttiefe im Umlenkbereich reduziert. Es sind verschiedene weitere Ausführungsvarianten von Fördergurten denkbar. So können deren Gurtglieder bspw. eine einzige Reihe von miteinander fluchtenden Laufrollen aufweisen. Wahlweise kann jedes Glied zwei parallele Reihen von jeweils miteinander fluchtenden Laufrollen aufweisen. Auch sind Varianten des Fördergurtes denkbar, bei denen jedes Glied drei parallele Reihen von jeweils miteinander fluchtenden Laufrollen aufweist. Hierbei können die Rollen auch paarweise hintereinander angeordnete und jeweils seitlich in einer Weise zueinander versetzt sein, dass sich zwar drei parallele Reihen ergeben, diese aber enger beabstandet sind als es die Durchmesser der Rollen normalerweise vorgeben.

Da Horizontalförderelemente wie der erfindungsgemäße Fördergurt unter Umständen einer mehrfachen Umlenkung bedürfen, sollten sie nicht nur bezüglich ihrer Oberseite konvex nach unten umlenkbar sein, sondern auch in entgegengesetzter Richtung, was als sog. Rückbiegung bezeichnet werden kann. Während die reguläre Umlenkung im Interesse eines geringen Abstandes zu benachbarten Fördergurten mit möglichst geringem Umlenkradius von bspw. 50 Millimetern oder weniger erfolgen sollte, kann der Rückbiegeradius normalerweise deutlich größer ausfallen, da hierfür konstruktionsbedingt größere Freiheitsgrade vorliegen. Gemäß einer bevorzugten Ausführungsvariante der vorliegenden Erfindung ist der Umlenkradius des Fördergurtes kleiner als der Rückbiegeradius. So sieht eine Ausführungsvariante des erfindungsgemäßen Fördergurtes einen Rückbiegeradius von maximal 250 Millimetern, insbesondere von weniger als 180, besonders bevorzugt von weniger als 150 Millimetern vor, so dass mehrfache Umlenkungen des Fördergurtes unterhalb der eigentlichen Horizontalförderebene ermöglicht sind.

Es sei zuletzt darauf hingewiesen, dass sich die Erfindung nicht nur auf Fördergurte gemäß einer oder mehrerer der zuvor beschriebenen Ausführungsvarianten bezieht, sondern gleichermaßen auf einzelne Gurtglieder eines solchen Fördergurtes.

Neben den genannten Vorteilen weist der erfindungsgemäße Fördergurt weitere Vorteile auf. So ermöglicht der Schutz gegen ungewollte manuelle Eingriffe einen besonders energiesparenden "Stand-by"-Betrieb von damit ausgestatteten Horizontalfördereinrichtungen, die normalerweise nicht komplett abgeschaltet werden dürfen, wenn Personen Zutritt oder Zugriff zu der Anlage haben. Um einen gefahrenträchtigen Stillstand der Fördergurte und die damit verbundene Quetschgefahr bei manuellen Eingriffen in den Förderbereich zu vermeiden, laufen die Fördereinrichtungen bei fehlendem Nachschub von Fördergütern oder bei anderen Produktionspausen mit geringer Geschwindigkeit und damit in einem Energie sparenden Betrieb weiter, was jedoch aus energetischer Sicht ungünstig ist. Aus energetischer Sicht ist es sinnvoller, die Fördereinrichtungen bei Produktionspausen oder fehlendem Nachschub von Fördergütern abzuschalten. Um jedoch die damit verbundenen gefahrenträchtigen Start- und Anfahrsituationen zu vermeiden, werden Fördereinrichtungen benötigt, von denen keine Betriebsgefahr für Personen ausgeht. Der erfindungsgemäße Fördergurt erfüllt diese Voraussetzungen und kann deshalb für solche Fördereinrichtungen vorteilhaft eingesetzt werden, da ein manueller Eingriff bei stillstehendem Fördergurt keine Verletzungsgefahr mehr auslöst.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in vier schematischen Ansichten eine erste Ausführungsvariante eines erfindungsgemäßen Fördergurtes.
Fig. 2 zeigt in drei schematischen Ansichten ein einzelnes Gurtglied des Fördergurtes gemäß Fig. 1.
Fig. 3 zeigt in einer schematischen Perspektivansicht einen Teil des Fördergurtes gemäß Fig. 1.
Fig. 4 zeigt in zwei schematischen Ansichten eine zweite Ausführungsvariante des erfindungsgemäßen Fördergurtes.
Fig. 5 zeigt in zwei schematischen Ansichten ein einzelnes Gurtglied des Fördergurtes gemäß Fig. 4.
Fig. 6 zeigt in einer schematischen Perspektivansicht einen Teil des Fördergurtes gemäß Fig. 4.
Fig. 7 zeigt in zwei schematischen Ansichten eine dritte Ausführungsvariante des Fördergurtes.
Fig. 8 zeigt in zwei schematischen Ansichten ein einzelnes Gurtglied des Fördergurtes gemäß Fig. 7.
Fig. 9 zeigt in einer schematischen Perspektivansicht einen Teil des Fördergurtes gemäß Fig. 7.
Fig. 10 zeigt in zwei schematischen Ansichten eine vierte Ausführungsvariante des Fördergurtes.
Fig. 11 zeigt in zwei schematischen Ansichten ein einzelnes Gurtglied des Fördergurtes gemäß Fig. 10.
Fig. 12 zeigt in einer schematischen Perspektivansicht einen Teil des Fördergurtes gemäß Fig. 10.
Fig. 13 zeigt in zwei schematischen Ansichten eine fünfte Ausführungsvariante des Fördergurtes.
Fig. 14 zeigt in zwei schematischen Ansichten ein einzelnes Gurtglied des Fördergurtes gemäß Fig. 13.
Fig. 15 zeigt in einer schematischen Perspektivansicht einen Teil des Fördergurtes gemäß Fig. 13.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

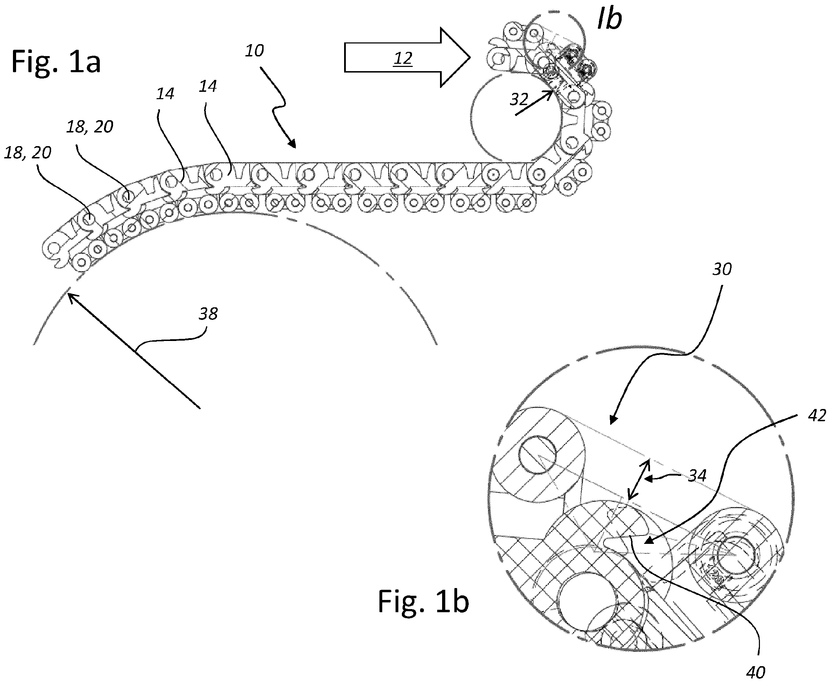

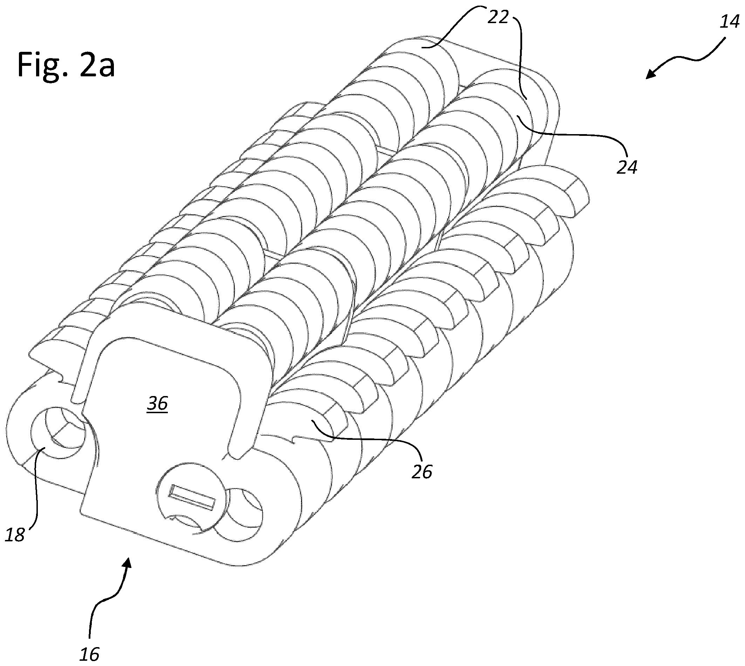

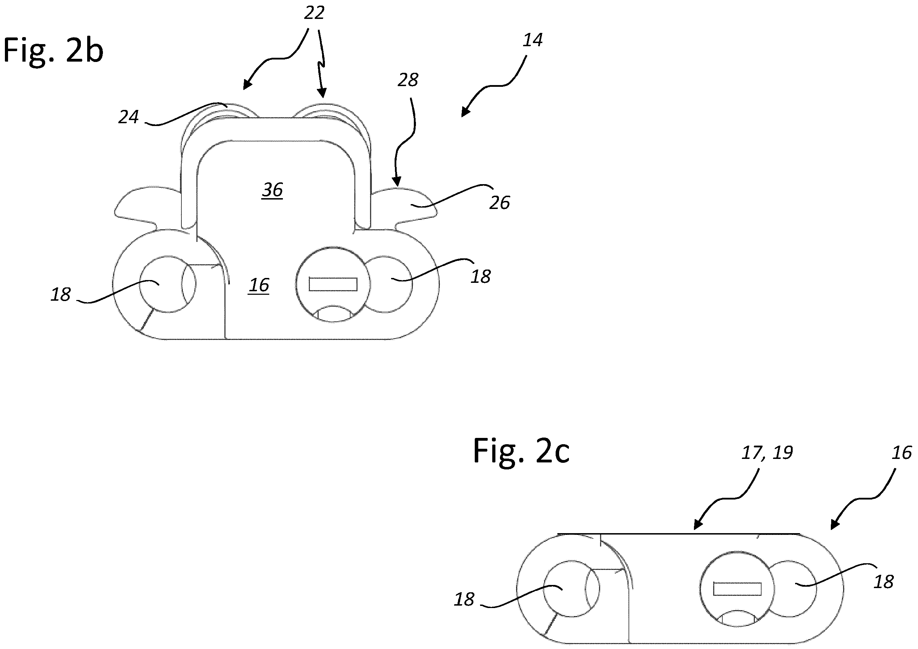

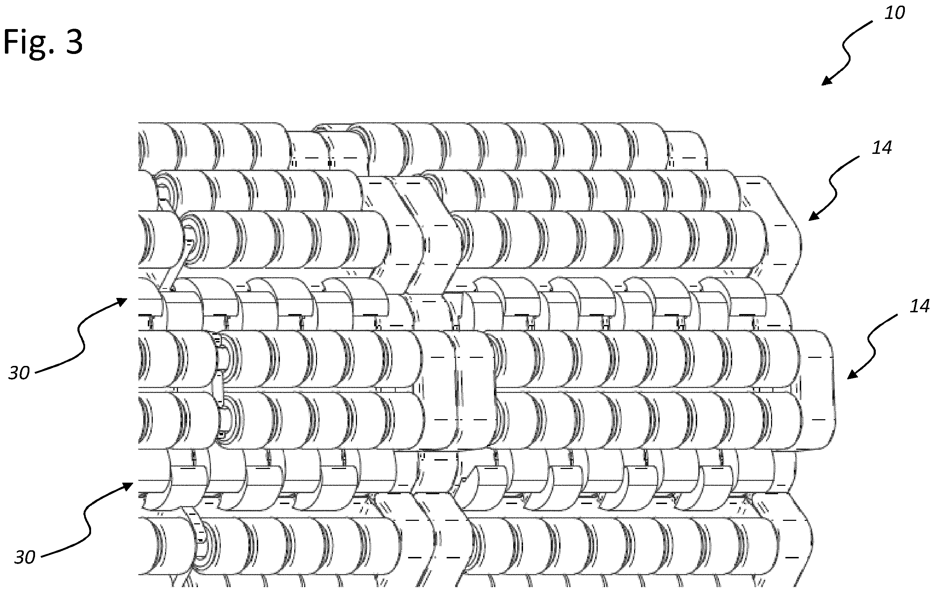

Die schematische Seitenansicht der Fig. 1a zeigt eine erste Ausführungsvariante eines erfindungsgemäßen mehrgliedrigen Fördergurtes 10, der dem Transport von Gegenständen (nicht dargestellt) wie Behältern oder Flaschen in horizontaler Transportrichtung 12 dient. Der Fördergurt 10 ist aus einer Vielzahl von gelenkig miteinander verbundenen Gliedern 14 gebildet. Wie die beiden Darstellungen der Fig. 2a und Fig. 2b verdeutlichen, weist jedes Glied 14 des erfindungsgemäßen Fördergurtes 10 einen länglichen Trägerabschnitt bzw. Träger 16 auf, dessen Unterseite einen Tragabschnitt des Fördergurtes 10 bildet und der zu beiden Längsseiten mindestens ein Gelenkauge 18, normalerweise jedoch mehrere parallele Gelenkaugen 18 zur drehgelenkigen Verbindung zu benachbarten Gliedern 14 aufweist. Die Gelenkaugen 18 jeweils benachbarter, miteinander verbundener Glieder 14 sind über Gelenkbolzen 20 miteinander verbunden. Die Gelenkbolzen 20 greifen in einer Weise durch die Gelenkaugen 18 der beiden miteinander verbundenen Glieder 14 hindurch, dass die benachbarten Glieder 14 um den Gelenkbolzen 20 schwenkbar verbunden sind (vgl. Fig. 1a, Fig. 3).

Weiterhin weist jeder Träger 16 eines Gliedes 14 an seiner Oberseite zwei parallele Reihen 22 von drehbar gelagerten Auflagerollen 24 auf, deren gemeinsame Drehachsen jeweils parallel zu den Gelenkbolzen 20 und zu den Längsseiten der Träger 16 der Glieder 14 liegen und die gemeinsam mit den Auflagerollen 24 der benachbarten Glieder 14 eine Auflagefläche für die zu transportierenden Gegenstände bilden.

Wie insbesondere die perspektivische Darstellung eines einzelnen Gurtgliedes 14 der Fig. 2a sowie die Seitenansicht des Gliedes 14 gemäß Fig. 2b zeigen, sind an beiden Längsseiten der Glieder 14 jeweils hakenförmige Abweiserelemente 26 angeordnet, die sich zwischen den Höhenniveaus der Auflagerollen 24 sowie der Oberseite der Träger 16 und zu beiden Seiten der Auflagerollen 24 erstrecken. Wie insbesondere die Fig. 2b verdeutlicht, erstrecken sich die Abweiserelemente 26 in den Bereich oberhalb der Gelenkaugen 18 des Trägers 16 der Glieder 14, überragen jedoch die Auflagerollen 24 nicht, damit sie den störungsfreien Transport der Fördergüter nicht beeinträchtigen, wenn der Fördergurt 10 in horizontaler Richtung 12 (vgl. Fig. 1a) bewegt wird. Die nach oben weisende Seiten 28 der hakenförmigen Abweiserelemente 26 sind jeweils konvex gekrümmt, damit im Betrieb des Fördergurtes 10 keine scharfen Kanten gebildet sind, wenn die Abweiserelemente 26 bei umgelenktem Fördergurt 10 und den dadurch entstehenden größeren Spalten 30 zwischen den Auflagerollen 24 benachbarter Glieder 14 ineinander greifen (vgl. Fig. 3, Fig. 1b).

Wie es die Fig. 1a verdeutlicht, erlauben die Abweiserelemente 26 die Umlenkung des Fördergurtes 10 mit relativ kleinen Umlenkradien 32 und schließen durch ihre besondere Formgebung die dabei entstehenden Lücken zwischen den Rollenreihen 22, so dass zwar die Grundabmessungen und die Breite der Spalten 30 weitgehend unverändert bleibt. Allerdings wird durch die Reduzierung der Spalttiefe die Eingriffstiefe minimiert, wodurch bei einem manuellen Eingreifen mit den Fingern das Einklemmen und die Quetschgefahr weitgehend ausgeschlossen werden. So kann eine Verletzungsgefahr durch Eingriffe zwischen die Glieder 14 weitgehend ausgeschlossen werden, da in die Spalten 30 eindringende Finger oder Gegenstände an die Oberseiten 28 der Abweiserelemente 26 stoßen und abgedrängt werden, sobald sie die Spalten 30 beim Übergang des Fördergurtes 10 in die gestreckte Ausrichtung wieder schließen. Gleichzeitig jedoch tragen die Abweiserelemente 26 dazu bei, eine weitgehend ebene Auflagefläche auch im Randbereich einer beginnenden Umlenkung des Fördergurtes 10 zu erhalten.

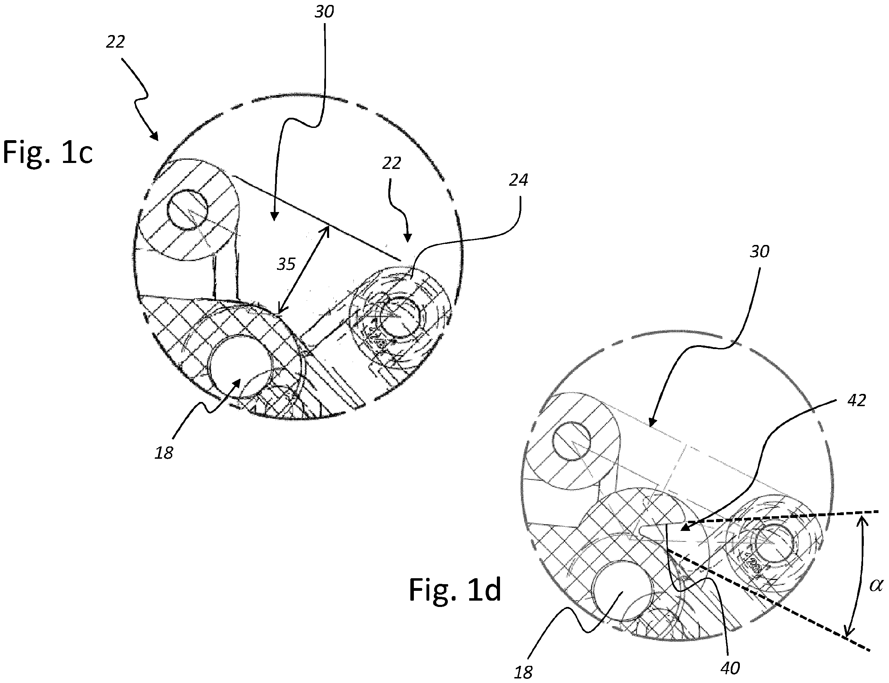

Die in Fig. 1b gezeigte vergrößerte Darstellung des Ausschnittes Ib der Fig. 1a verdeutlicht, wie die jeweils versetzt zueinander angeordneten Abweiserelemente 26 ineinander greifen, wodurch ihre Oberseiten 28 eine näherungsweise zylindersegmentförmige Kontur bilden, welche eine Spalttiefe 34 deutlich gegenüber einer Bauform ohne die Abweiserelemente 26 reduziert. Wie es die vergrößerte Darstellung der Fig. 1c erkennen lässt, ergäbe sich ohne die Abweiserelemente 26 eine vergrößerte Spalttiefe 35 aus dem Abstand zwischen der Verbindungstangente der Rollenreihen 22 benachbarter Glieder 14 und der Oberseite des Gelenkauges 18. Diese vergrößerte Spalttiefe 35, die sich gemäß Fig. 1c ohne die Abweiserelemente 26 ergäbe, ist mit den erfindungsgemäßen Abweiserelementen 26 nahezu halbiert auf die Spalttiefe 34, wie es der Vergleich der Fig. 1c mit der Fig. 1b erkennen lässt.

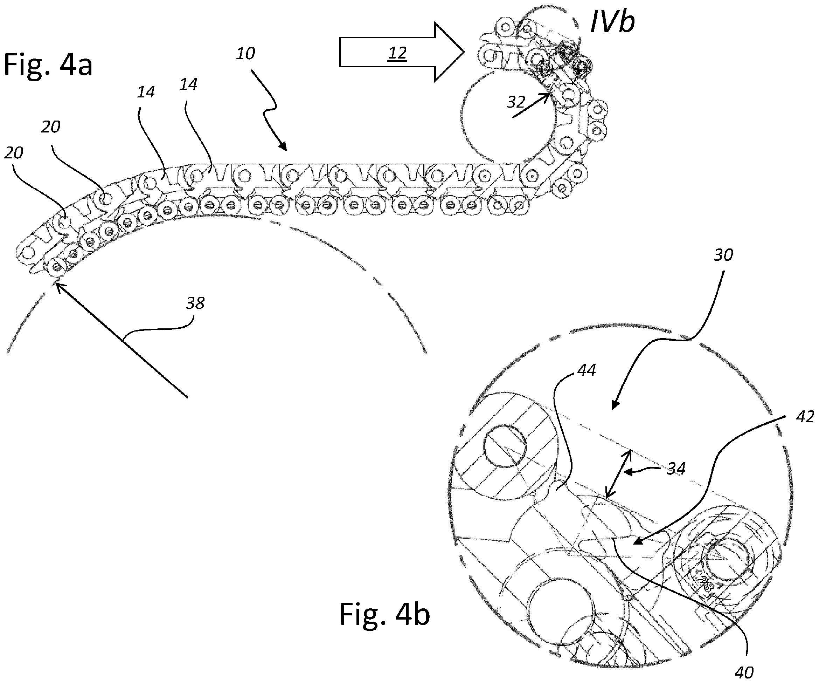

Die sich jeweils aus der Gestaltung und Position der Abweiserelemente 26 ergebenden Spalttiefen 34 lassen sich auch in den Figuren 4b, 7b, 10b und 13 b erkennen, die in Detailansichten die jeweils zusammenwirkenden Abweiserelemente 26 benachbarter Glieder 14 der unterschiedlichen Ausführungsvarianten der Fördergurte 10 zeigen.

Wie die Figuren 2a und 2b weiterhin verdeutlichen, sind die Abweiserelemente 26 in der gezeigten ersten Ausführungsvariante Teil des Trägers 16 und ragen aus diesem schräg nach oben heraus. Der Träger 16 mit den Abweiserelementen 26, den Gelenkaugen 18 und den zu beiden Schmalseiten vorgesehenen Lagerschilden 36 zur Aufnahme der Achsen für die beiden Reihen 22 mit den Laufrollen 24 kann einstückig aus Kunststoff, bspw. im Spritzgussverfahren hergestellt sein.

Die schematische Darstellung der Fig. 2c verdeutlicht, was mit dem Träger 16 eines Gliedes 14 gemeint ist. Der Träger 16 stellt gemäß Fig. 2c ein Basiselement oder einen Grundkörper dar, das/der an beiden Längsseiten die Gelenkaugen 18 zur gelenkigen Verbindung mehrerer solcher Glieder 14 aufweist. An der Oberseite 17 des Trägers 16 befinden sich gemäß Fig. 2b die beiden Rollenreihen 22 mit den Laufrollen 24, deren Achsen (nicht gezeigt) in den beiden Lagerschilden 36 gehalten sind. Ohne die Lagerschilde 36 und die darin gehaltenen Rollenreihen 22 bildet der Träger 16 (vgl. Fig. 2c) gleichzeitig das Glied 14 eines Fördergurtes 10 ohne Laufrollen 24. Wie es die übrigen Figuren 1 bis 15 jeweils erkennen lassen, bildet die Oberseite 17 jedes Trägers 16 gleichzeitig ein Grundniveau 19, über das sich sowohl die Rollenreihen 22 mit ihren Auflagerollen 24 als höchstes Auflageniveau für die mit dem Fördergurt 10 beförderten Artikel, Behälter, Gebinde, Stückgüter o. dgl. als auch die Abweiserelemente 26 jeweils erheben. Die Abweiserelemente 26 weisen erfindungsgemäß jeweils eine räumliche Erstreckung auf, die sich zwischen dem obersten Niveau der Auflagerollen 24 und dem Grundniveau 19 der Oberseiten 17 der Träger 16 befindet.

Wie die schematischen Perspektivansicht der Fig. 3 verdeutlicht, die einen Teil des Fördergurtes 10 gemäß Fig. 1 zeigt, können mehrere solcher Gurtabschnitte parallel nebeneinander angeordnet sein und den gesamten Fördergurt 10 bilden.

Die Seitenansicht der Fig. 1a verdeutlicht zudem die unter Umständen erforderliche Rückbiegungseignung des Fördergurtes 10, der ggf. mehrfach umgelenkt werden muss. Während die reguläre Umlenkung im Interesse eines geringen Abstandes zu benachbarten Fördergurten mit möglichst geringem Umlenkradius 32 von bspw. 50 Millimetern oder weniger erfolgen sollte, kann der Rückbiegeradius 38 normalerweise deutlich größer ausfallen, da hierfür konstruktionsbedingt größere Freiheitsgrade vorliegen. So sieht die in den Figuren 1 bis 12 gezeigte Ausführungsvariante des erfindungsgemäßen Fördergurtes 10 einen Rückbiegeradius 38 von bspw. weniger als 150 mm vor, so dass mehrfache Umlenkungen des Fördergurtes 10 unterhalb der eigentlichen Horizontalförderebene ermöglicht sind. Bei den gezeigten Ausführungsbeispielen der Erfindung ist der Umlenkradius jeweils deutlich kleiner als der Rückbiegeradius des Fördergurtes.

Um diesen Rückbiegeradius 38 von vorzugsweise weniger als 150 mm zu erlauben, sind die Abweiserelemente 26 an ihren Unterseiten 40 jeweils eingekerbt, so dass sie bei Kontaktierung ihrer Unterseiten 40 mit den Oberseiten der Gelenkaugen 18 den maximal möglichen Rückbiegewinkel begrenzen und definieren. D.h., die Größe bzw. Breite der Kerbe 42 zwischen der Unterseite 40 des Abweiserelementes 26 und der zum Abweiserelement 26 weisenden Oberseite des Gelenkauges 18 definiert den Rückbiegewinkel und damit den Rückbiegeradius 38 des Fördergurtes 10 (vgl. Fig. 1a).

Die Detailansicht der Fig. 1d verdeutlicht den Öffnungswinkel α der Kerbe 42, die sich zwischen der Unterseite 40 des Abweiserelements 26 und der Oberseite des Gelenkauges 18 mit einem Winkel α öffnet. Dieser Winkel α kann je nach benötigtem Rückbiegeradius 38 zwischen bspw. 5 Grad und ca. 30 Grad betragen. Sinnvolle Werte für den Öffnungswinkel α liegen jedoch zwischen ca. 10 und 15 Grad. Identische, ähnliche oder auch abweichende Öffnungswinkel α können zudem bei den weiteren Ausführungsvarianten der Abweiserelemente 26 gemäß Fig. 4b, Fig. 7b, Fig. 10b oder Fig. 13b vorgesehen sein. Der Öffnungswinkel α ist zur besseren Veranschaulichung lediglich in der Fig. 1d kenntlich gemacht.

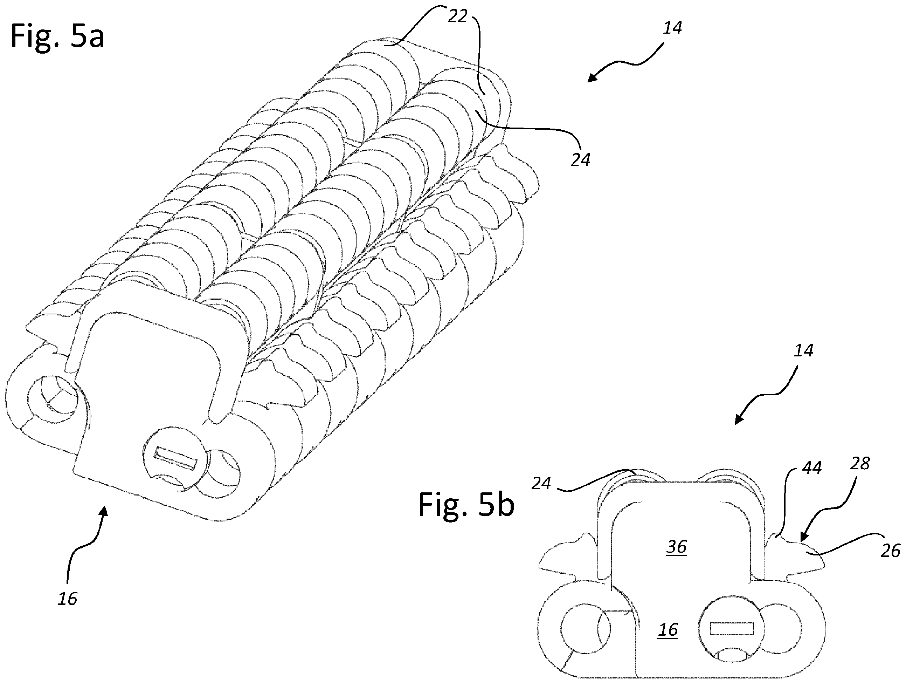

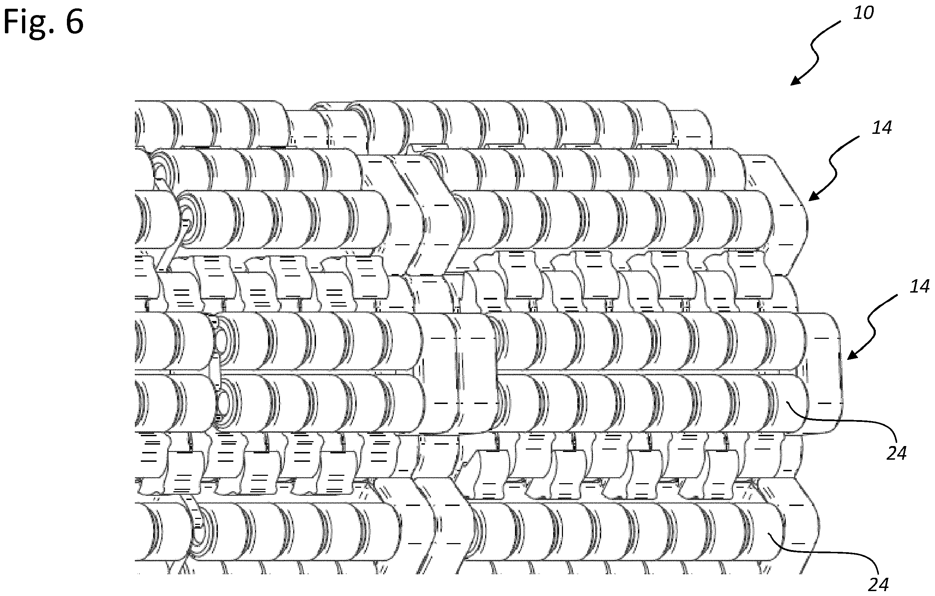

Die Fig. 4 zeigt in zwei schematischen Ansichten eine zweite Ausführungsvariante des erfindungsgemäßen Fördergurtes 10, während die Fig. 5 in zwei schematischen Ansichten ein einzelnes Gurtglied 14 des Fördergurtes 10 gemäß Fig. 4 zeigt. Die Fig. 6 zeigt in einer schematischen Perspektivansicht einen Teil des Fördergurtes 10 gemäß Fig. 4. Der Fördergurt 10 mit den einzelnen Gliedern 14 und deren Auflagerollen 24 sowie der Anordnung der Abweiserelemente 26 entspricht bei der in den Figuren 4 bis 6 gezeigten zweiten Ausführungsvariante weitgehend der ersten Variante gemäß Figuren 1 bis 3. Allerdings sind bei dieser zweiten Variante die Abweiserelemente 26 leicht modifiziert, wie der Detailausschnitt der Fig. 4b (Vergrößerung des Details IVb aus Fig. 4a) sowie die beiden Darstellungen der Fig. 5 verdeutlichen. Wie bei der ersten Variante sind die am Träger 16 verankerten Abweiserelemente 26 jeweils durch hakenförmige Verlängerungen gebildet, die in den Bereich zwischen benachbarten Gliedern 14 und oberhalb des Grundniveaus des Trägers 16 hineinreichen.

Wie die perspektivische Darstellung eines einzelnen Gurtgliedes 14 der Fig. 5a sowie die Seitenansicht des Gliedes 14 gemäß Fig. 5b zeigen, sind an beiden Längsseiten der Glieder 14 jeweils hakenförmige Abweiserelemente 26 angeordnet, die sich zwischen den Höhenniveaus der Auflagerollen 24 sowie der Oberseite der Träger 16 und zu beiden Seiten der Auflagerollen 24 erstrecken. An ihren Oberseiten 28 weisen die Abweiserelemente 26 jeweils einen hakenförmigen Vorsprung 44 auf, der sich nahe an der angrenzenden Auflagerolle 24 befindet, wie insbesondere die Fig. 4b erkennen lässt. Der Schutz gegen Eingriffe wird hierdurch nochmals etwas verbessert, auch wenn die Spalttiefe 34 selbst gegenüber der ersten Variante nicht verändert ist.

Wie die Figuren 5a und 5b zeigen, sind auch bei dieser Variante die Abweiserelemente 26 jeweils Teil des zugehörigen Trägers 16 und ragen aus diesem schräg nach oben heraus. Die Anordnung und Dimensionierung der Kerben 42 an der Unterseite 40 der hakenförmigen Abweiserelemente 26 entspricht weitgehend der ersten Variante, so dass sich die gleichen Rückbiegungseigenschaften ergeben (vgl. Fig. 4a).

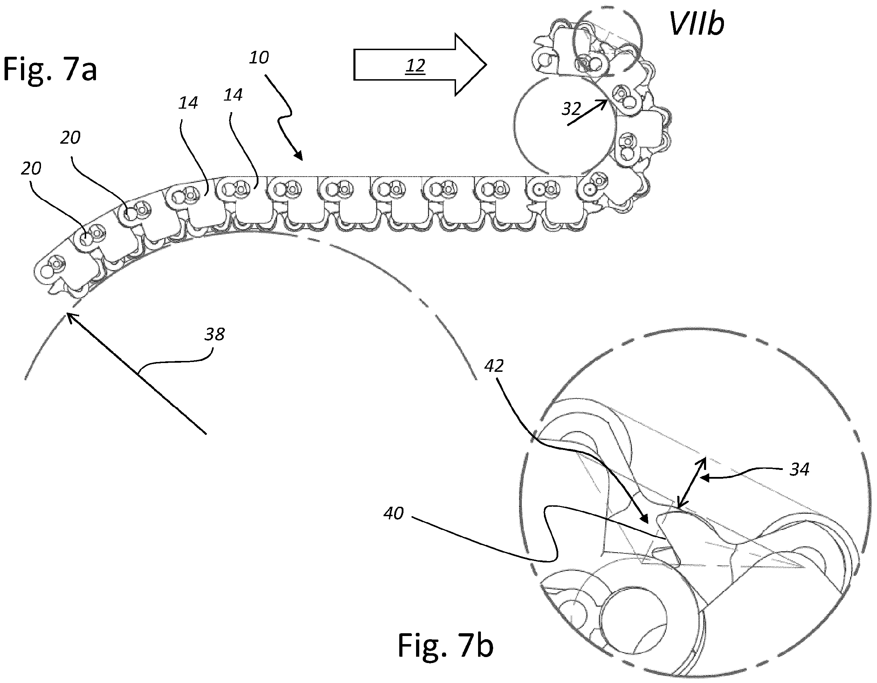

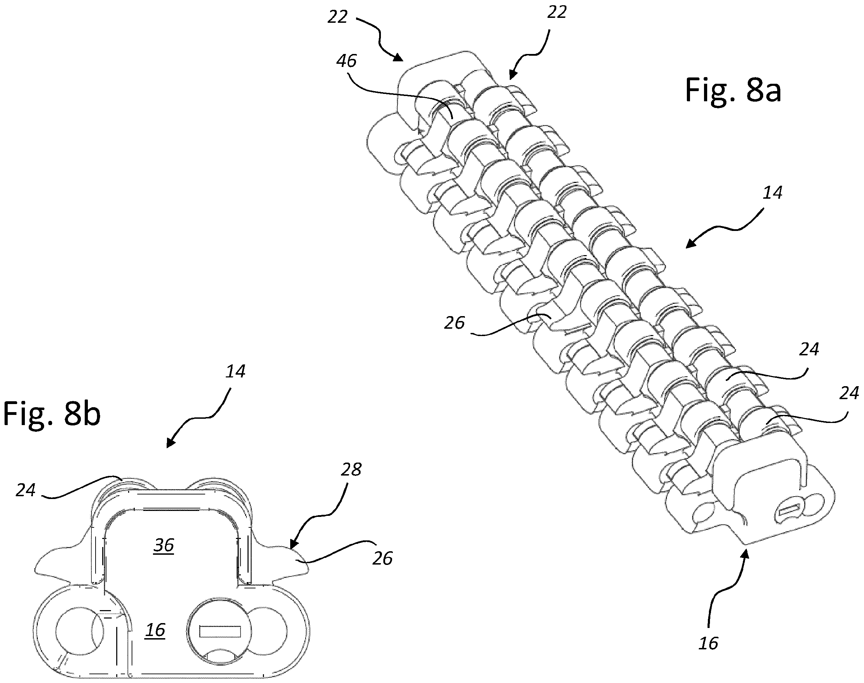

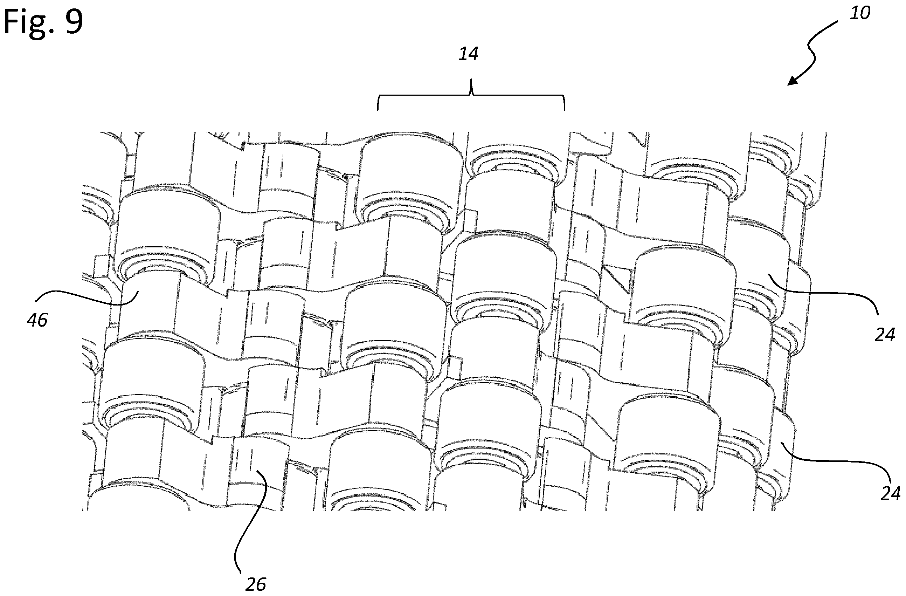

Die Fig. 7 zeigt in zwei schematischen Ansichten eine dritte Ausführungsvariante des erfindungsgemäßen Fördergurtes 10, während die Fig. 8 in zwei weiteren schematischen Ansichten ein einzelnes Gurtglied 14 des Fördergurtes 10 gemäß Fig. 7 zeigt. Die Fig. 9 zeigt in einer schematischen Perspektivansicht einen Teil des Fördergurtes 10 gemäß Fig. 7. Der Fördergurt 10 mit den einzelnen Gliedern 14 und deren Auflagerollen 24 sowie der Anordnung der Abweiserelemente 26 ähnelt den zuvor gezeigten Ausführungsvarianten. Das Profil der Abweiserelemente 26 ähnelt dem der ersten Variante. Allerdings unterscheidet sich der gesamte Aufbau der Rollenreihen 22 und die Abstände der Rollen 24 voneinander von den zuvor gezeigten ersten und zweiten Ausführungsvarianten. Wie bei der ersten Variante sind die am Träger 16 verankerten Abweiserelemente 26 jeweils durch Haken gebildet, die in den Bereich zwischen benachbarten Gliedern 14 und oberhalb des Grundniveaus des Trägers 16 hineinreichen (vgl. Fig. 9). Die Abweiserelemente 26 weisen zusätzliche jeweils eine nach oben reichende Verlängerung 46 auf, die den Platz einer Rolle 24 ausfüllt und ungefähr dieselbe Breite wie eine Rolle 24 aufweist.

Wie insbesondere die perspektivische Ansicht der Fig. 8a verdeutlicht, wechselt sich in jeder Rollenreihe 22 ein Abweiserelement 26 mit nach oben reichender Verlängerung 46 mit einer Auflagerolle 24, wobei die Abweiserelemente 26 und Auflagerollen 24 der beiden parallelen Rollenreihen 22 jeweils versetzt zueinander angeordnet sind. Die Verlängerungen 46 fungieren dadurch zwar nicht als Auflageflächen für die Fördergüter, da ihr Höhenniveau leicht unterhalb dem der Auflagerollen 24 liegt, doch füllen sie alle Lücken aus, die durch die fehlenden Auflagerollen 24 entstehen. Die Verlängerungen 46 können zudem als Lagerböcke für die Achsen der Auflagerollen 24 fungieren, so dass diese vielfach abgestützt sind, was die gesamte Auflageebene sehr stabil macht.

Wie die schematische Perspektivdarstellung der Fig. 9 verdeutlicht, bilden die Auflagerollen 24 mit den Abweiserelementen 26 und deren Verlängerungen 46 eine sehr dichte Struktur, die nahezu keine Lücken lässt, die einen gefährlichen manuellen Eingriff erlauben. Die Detaildarstellung der Fig. 7b (Vergrößerung des Details Vllb aus Fig. 7a) lässt eine nochmals geringfügig reduzierte Spalttiefe 34 erkennen.

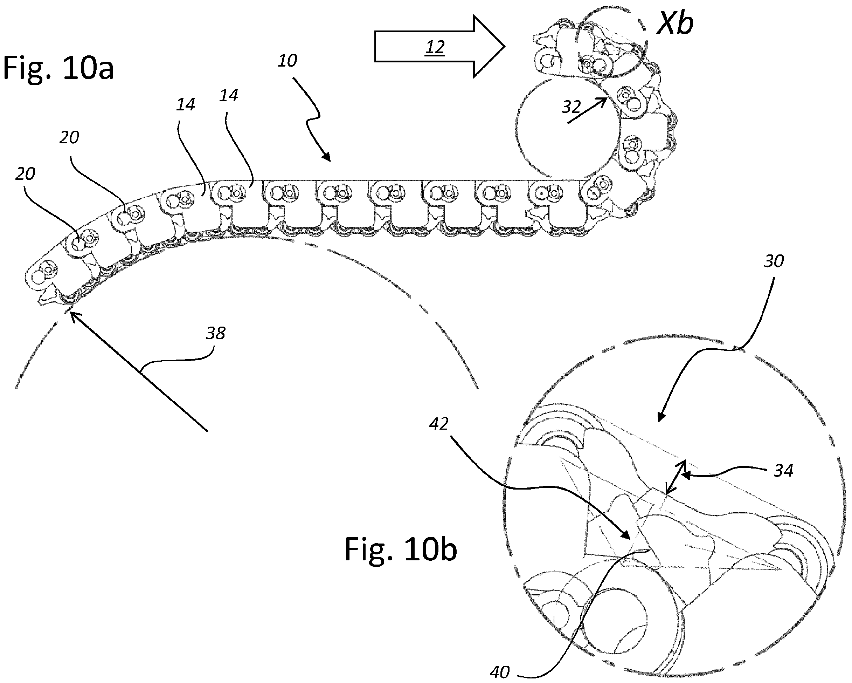

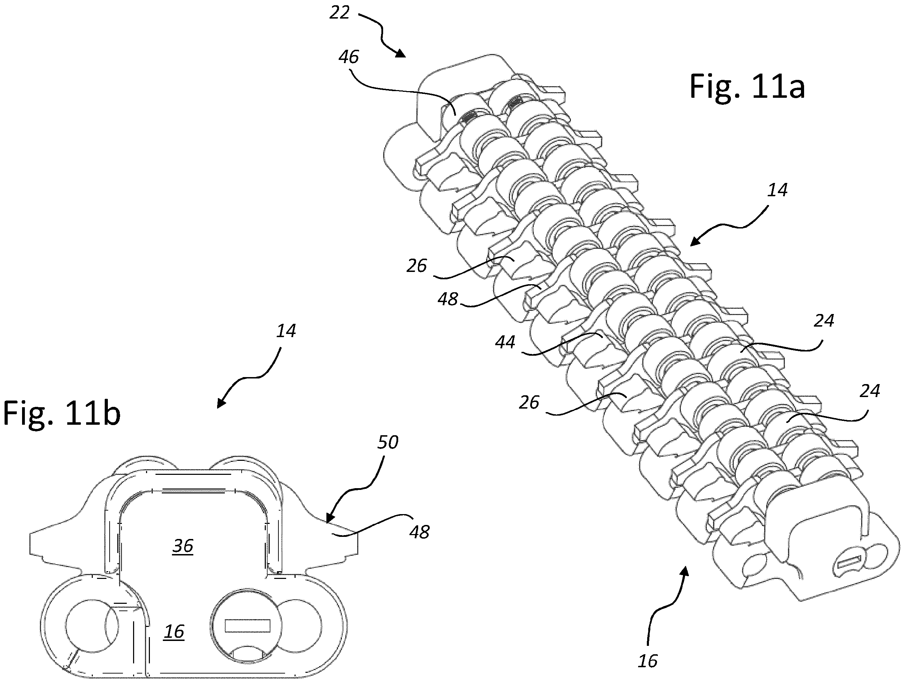

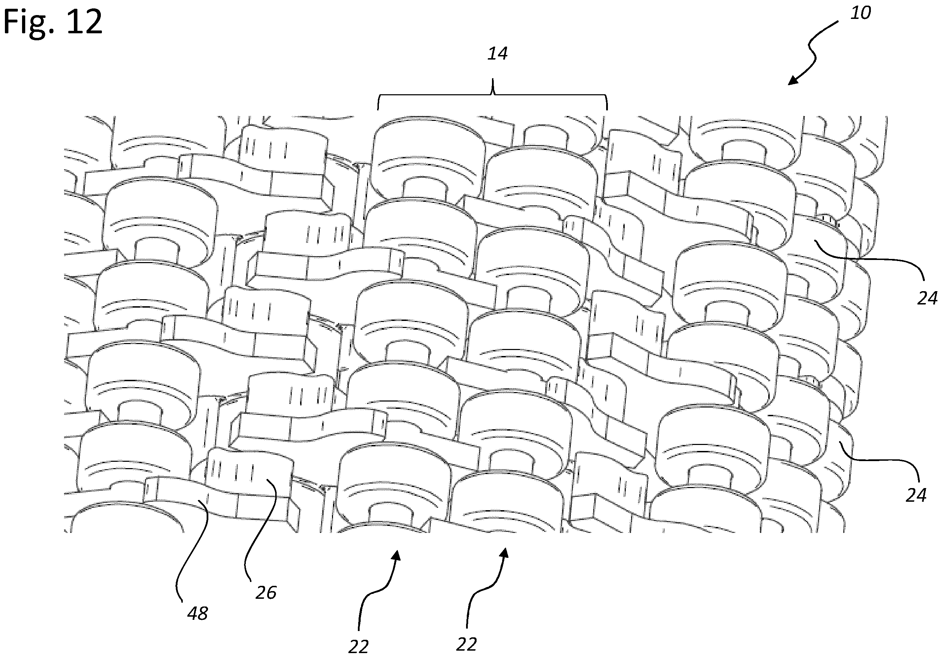

Die Fig. 10 zeigt in zwei schematischen Ansichten eine vierte Ausführungsvariante des erfindungsgemäßen Fördergurtes 10, während die Fig. 11 in zwei weiteren schematischen Ansichten ein einzelnes Gurtglied 14 des Fördergurtes 10 gemäß Fig. 10 zeigt. Die Fig. 12 zeigt in einer schematischen Perspektivansicht einen Teil des Fördergurtes 10 gemäß Fig. 10. Der Fördergurt 10 mit den einzelnen Gliedern 14 und deren Auflagerollen 24 sowie der Anordnung der Abweiserelemente 26 ähnelt den zuvor gezeigten Ausführungsvarianten. Auch das Profil der Abweiserelemente 26 ähnelt dem der zweiten Variante (vgl. Fig. 11a, Fig. 5a).

Wie jedoch insbesondere die Figuren 11a und 12 erkennen lassen, unterscheidet sich der gesamte Aufbau der Rollenreihen 22 und die Abstände der Rollen 24 voneinander von den zuvor gezeigten ersten, zweiten und dritten Ausführungsvarianten. Wie bei der zweiten Variante sind die am Träger 16 verankerten Abweiserelemente 26 jeweils durch hakenförmige Verlängerungen gebildet, die in den Bereich zwischen benachbarten Gliedern 14 und oberhalb des Grundniveaus des Trägers 16 hineinreichen. Zudem weisen die Abweiserelemente 26 jeweils an ihren Oberseiten 28 dieselben Vorsprünge 44 auf wie diejenigen der zweiten Variante (vgl. Fig. 5a, Fig. 5b). Wie insbesondere die Figuren 11a und 11b erkennen lassen, sind bei dieser vierten Ausführungsvariante zusätzliche Abweiserscheiben 48 vorgesehen, die durch Verlängerungen von länglichen Scheiben gebildet sind, die gemeinsam mit einzelnen Laufrollen 24 an deren Achsen gelagert bzw. befestigt sind. So sind die neben jedem Abweiserelement 26 angeordneten zusätzlichen Abweiserscheiben 48 jeweils durch Materialbrücken gebildet, die zwischen die Rollen 24 hineinreichen und/oder dort verankert sind. Diese Abweiserscheiben 48 weisen jeweils eine gegenüber den Oberseiten 28 der Abweiserelemente 26 erhöhte und flacher abfallende Oberseite 50 auf, wodurch sich eine insgesamt deutlich geringere Spalttiefe 34 ergibt (vgl. Fig. 10b, die eine Vergrößerung des Details Xb aus Fig. 10a darstellt), wenn der Fördergurt 10 umgelenkt wird. Die Eingriffssicherheit und der Schutz gegen Verletzungen ist bei dieser Variante somit nochmals erhöhrt.

Wie die perspektivische Detailansicht der Fig. 12 erkennen lässt, müssen die zusätzlichen Abweiserscheiben 48 nicht zwingend durchgängig nach beiden Seiten der Längsseiten des Gliedes 14 reichen, sondern können bspw. jeweils zu einer Längsseite des Gliedes 14 weisen. Die in Laufrichtung 12 (vgl. Fig. 10a) des Fördergurtes 10 jeweils miteinander fluchtenden Laufrollen 24 weisen hierbei jeweils solche Abstände von benachbarten Rollen 24 einer Reihe 22 auf, dass wahlweise zwischen die benachbarten Laufrollen 24 solche Abweiserscheiben 48 eingefügt werden können. Von diesen Lücken zwischen den Rollen 24 ist jede zweite besetzt, so dass sich ein Versatz der Anordnungen der Abweiserscheiben 48 entsprechend Fig. 12 ergibt.

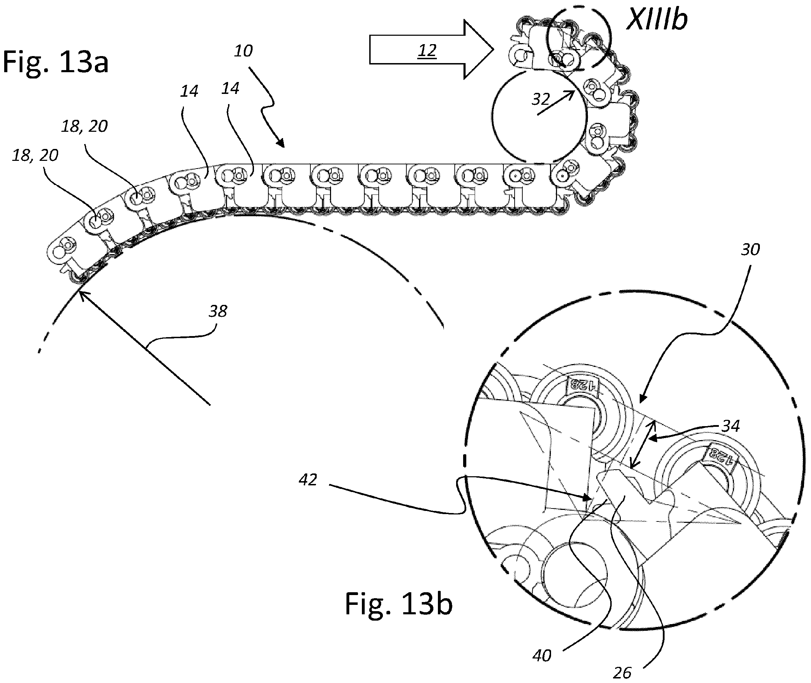

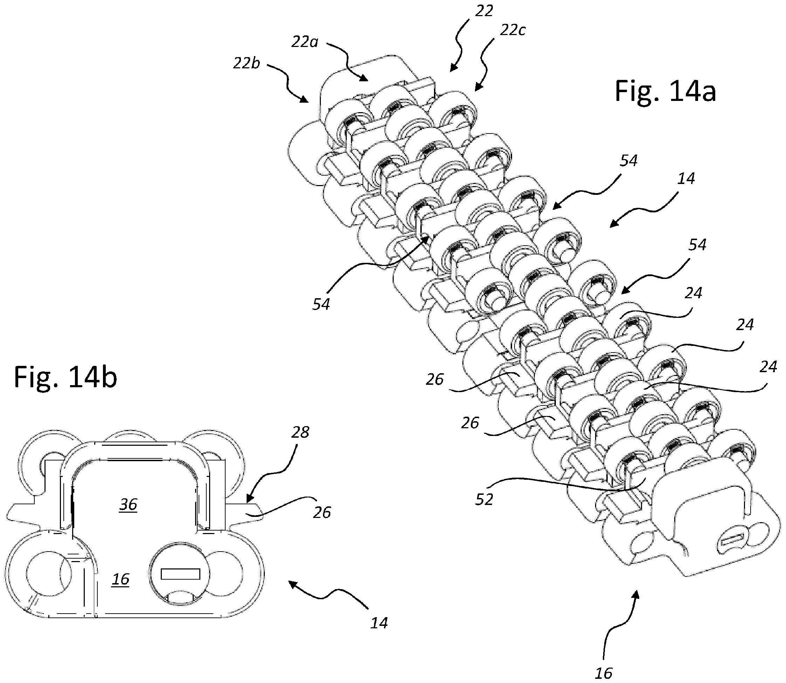

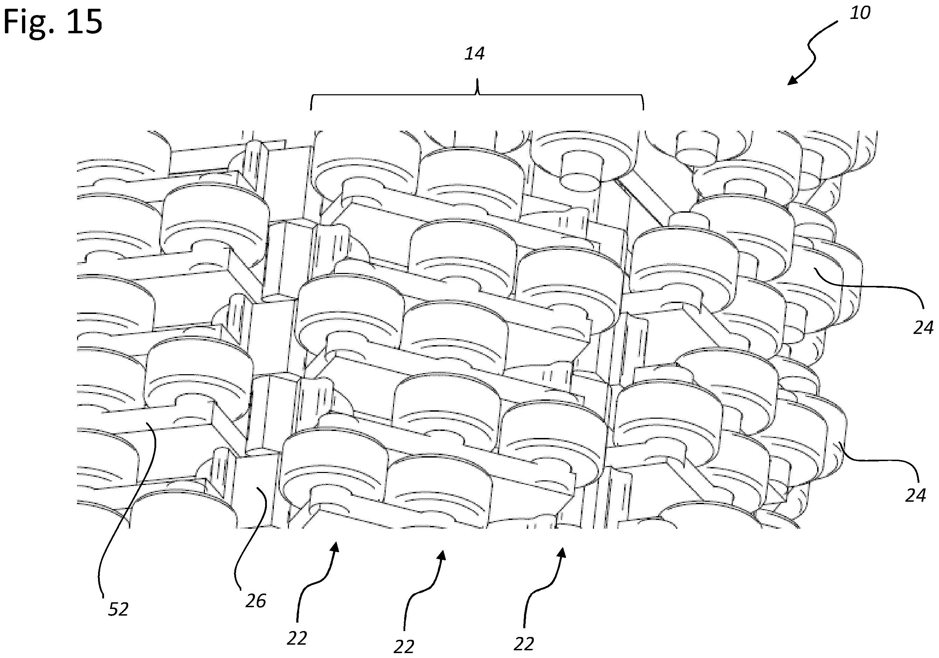

Die Fig. 13 zeigt in zwei schematischen Ansichten eine fünfte Ausführungsvariante des erfindungsgemäßen Fördergurtes 10, während die Fig. 14 in zwei weiteren schematischen Ansichten ein einzelnes Gurtglied 14 des Fördergurtes 10 gemäß Fig. 13 zeigt. Die Fig. 15 zeigt in einer schematischen Perspektivansicht einen Teil des Fördergurtes 10 gemäß Fig. 13. Wie diese fünfte Ausführungsvariante des Fördergurtes 10 verdeutlicht, sind grundsätzlich unterschiedliche Konfigurationen der Rollenreihen 22 möglich. Während die zuvor gezeigten Varianten jeweils zwei parallele Reihen 22 mit fluchtenden oder versetzt angeordneten Laufrollen 24 vorsehen, weist die fünfte Ausführungsvariante insgesamt drei parallele Reihen 22 mit Laufrollen 24 auf (vgl. Fig. 14a), die jeweils paarweise fluchtend hintereinander und abwechselnd seitlich versetzt zueinander angeordnet sind, so dass sich zwar drei parallele Reihen 22 ergeben, diese aber enger beabstandet sind als es die Durchmesser der Rollen 24 normalerweise vorgeben.

Die mittlere Reihe 22a ist hierbei vollständig mit Rollen 24 besetzt, die jeweils soweit voneinander beabstandet sind, dass zwischen jedes Rollenpaar der mittleren Reihe 22a jeweils flache Lagerstege 52 passen, an denen die Rollen 24 der beiden äußeren Reihen 22b und 22c gelagert sind. Bei diesen äußeren Reihen 22b und 22c sind nicht alle Plätze besetzt, sondern nur jeder zweite, so dass sich die versetzte Anordnung gemäß Fig. 14a ergibt, die eine ausgeprägte Spaltbildung bei der Umlenkung des Fördergurtes 10 verhindert (vgl. Fig. 15), da jede Lücke 54 ohne Rolle 24 in einer der Reihen 22b oder 22c eines Gliedes 14 auf eine entsprechend platzierte Rolle 24 in der jeweils angrenzenden Reihe 22c bzw. 22b des benachbarten Gliedes 14 trifft.

Die Bereiche der Lücken 54 in den äußeren Reihen 22b und 22c sind jeweils mit Abweiserelementen 26 besetzt, die bei der fünften Ausführungsvariante flacher und mit nicht gewölbter Oberseite 28 gestaltet sind.

Wie die schematische Detailansicht der Fig. 13b (Vergrößerung des Details XIIIb aus Fig. 13a) erkennen lässt, bilden die Auflagerollen 24 mit den flachen, zungenartigen Abweiserelementen 26 äußerst schmale Spalten 30, bei denen die Spalttiefe 34 zwar größer ist als bei den zuvor gezeigten Ausführungsformen. Allerdings ist die Spaltbreite so gering, dass manuelle Eingriffe in die Spalten 30 bei der Umlenkung des Fördergurtes 10 nahezu ausgeschlossen sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Fördergurt
- 12: Transportrichtung
- 14: Gurtglied, Glied
- 16: Träger
- 17: Oberseite (des Trägers)
- 18: Gelenkauge
- 19: Grundniveau
- 20: Gelenkbolzen
- 22: Reihe, Rollenreihe
- 22a: mittlere Reihe
- 22b, 22c: äußere Reihen
- 24: Rolle, Auflagerollen, Laufrolle
- 26: Abweiserelemente
- 28: oben weisende Seite, Oberseite
- 30: Spalt
- 32: Umlenkradien
- 34: Spalttiefe
- 35: vergrößerte Spalttiefe
- 36: Lagerschilden
- 38: Rückbiegeradius
- 40: Unterseiten
- 42: Kerbe
- 44: hakenförmigen Vorsprung
- 46: hakenförmige Verlängerungen
- 48: Abweiserscheiben, Materialbrücken
- 50: Oberseite
- 52: Lagerstege
- 54: Lücke

- α: Öffnungswinkel

## Patentansprüche

1. Mehrgliedriger Fördergurt (10) zum Transport von Gegenständen wie Behälter, Flaschen, Gebinden o. dgl., der aus einer Vielzahl von gelenkig miteinander verbundenen Gliedern (14) gebildet ist, die jeweils einen länglichen Träger (16) aufweisen, dessen Unterseite einen Tragabschnitt des Fördergurtes (10) bildet und der zu beiden Längsseiten parallele Gelenkaugen (18) zur drehgelenkigen Verbindung zu benachbarten Gliedern (14) aufweist, wobei die Gelenkaugen (18) jeweils benachbarter, miteinander verbundener Glieder (14) über jeweils wenigstens einen Gelenkbolzen (20), der durch die Gelenkaugen (18) der beiden miteinander verbundenen Glieder (14) durchgreift, derart verbunden sind, dass die benachbarten Glieder (14) um den wenigstens einen Gelenkbolzen (20) schwenkbar verbunden sind, und wobei jeder Träger (16) eines Gliedes (14) an seiner Oberseite wenigstens eine Reihe (22) von drehbar gelagerten Auflagerollen (24) aufweist, deren Drehachsen parallel zu den Gelenkbolzen (20) und zu den Längsseiten der Träger (16) der Glieder (14) liegen und die gemeinsam mit den Auflagerollen (24) der benachbarten Glieder (14) eine Auflagefläche für die zu transportierenden Gegenstände bilden, **dadurch gekennzeichnet, dass** im Bereich der Längsseiten der Glieder (14) Abweiserelemente (26) vorgesehen sind, die sich zwischen einem obersten Niveau der Auflagerollen (24) sowie einem Grundniveau der Oberseiten (17) der Träger (16) und an wenigstens einer Seite der Auflagerollen (24) erstrecken, wobei die Abweiserelemente (26) von zueinander weisenden Längsseiten aneinander grenzender Glieder (14) ineinander greifen.

2. Fördergurt (10) nach Anspruch 1, bei dem die Abweiserelemente (26) jeweils durch hakenförmige Verlängerungen (46) gebildet sind, die in einen Bereich zwischen benachbarten Gliedern (14) und oberhalb des Grundniveaus (19) hineinreichen.

3. Fördergurt (10) nach Anspruch 1 oder 2, bei dem die Abweiserelemente (26) jeweils am Träger (16) eines Gliedes (14) verankert sind.

4. Fördergurt (10) nach einem der Ansprüche 1 bis 3, bei dem die Abweiserelemente (26) jeweils mit Erhöhungen an den nach oben in Richtung der Auflagerollen (24) weisenden Rückseiten der hakenförmigen Verlängerungen (46) versehen sind.

5. Fördergurt (10) nach einem der Ansprüche 1 bis 4, bei dem die Abweiserelemente (26) jeweils gleiche Teilungsabstände wie einzelne Rollen (24) aufweisen.

6. Fördergurt (10) nach einem der Ansprüche 1 bis 5, bei dem die Abweiserelemente (26) jeweils in Lücken zwischen benachbarten Rollen (24) eingreifen und/oder hineinragen.

7. Fördergurt (10) nach einem der Ansprüche 1 bis 6, bei dem jedes Glied (14) an beiden Längsseiten jeweils Reihen (22) von Abweiserelementen (26) aufweist.

8. Fördergurt (10) nach einem der Ansprüche 1 bis 7, bei dem jedes Glied (14) zwei parallele Reihen (22) von jeweils miteinander fluchtenden Laufrollen (24) aufweist.

9. Fördergurt (10) nach einem der Ansprüche 1 bis 7, bei dem jedes Glied (14) drei parallele Reihen (22) von jeweils miteinander fluchtenden Laufrollen (24) aufweist.

10. Fördergurt (10) nach einem der Ansprüche 1 bis 9, der einen Rückbiegeradius (38) von maximal 250 Millimetern, insbesondere von weniger als 180, besonders bevorzugt von weniger als 150 Millimetern aufweist.

11. Fördergurt (10) nach einem der voranstehenden Ansprüche, wobei die Abweiserelemente (26) an den zueinander weisenden Längsseiten aneinander grenzender Glieder (14) in abwechselnder Reihung an den jeweils benachbarten Gliedern (14) verankert sind.

12. Fördergurt (10) nach einem der Ansprüche 2 bis 11, wobei die nach oben weisenden Seiten (28) der hakenförmigen Abweiserelemente (26) konvex gekrümmt sind.

13. Fördergurt (10) nach einem der voranstehenden Ansprüche, wobei die Oberseiten (28) der jeweils versetzt zueinander angeordneten und ineinandergreifenden Abweiserelemente (26) eine näherungsweise zylindersegmentförmige Kontur bilden.

## Claims

1. A multi-link conveyor belt (10) for the transport of objects such as containers, bottles, packs, or the like, the conveyor belt (10) being formed from a multitude of links (14) connected to each other in an articulated manner, and each link (14) having an elongate carrier (16), the underside of which carrier (16) forms a carrying section of the conveyor belt (10), and which carrier (16) has parallel joint eyes (18) on both longitudinal sides for the articulated connection to adjacent links (14), wherein the joint eyes (18) of particular interconnected adjacent links (14) are in each case connected via at least one joint pin (20) extending through the joint eyes (18) of the two interconnected links (14) such that the adjacent links (14) are connected so as to be swivelable about the at least one joint pin (20), and wherein each carrier (16) of a link (14) has on its upper side at least one row (22) of rotatably mounted support rollers (24), the axes of rotation of which are parallel to the joint pins (20) and to the longitudinal sides of the carriers (16) of the links (14), and which support rollers (24), together with the support rollers (24) of the adjacent links (14), form a support surface for the objects to be transported, **characterised in that** deflector members (26) are provided in the area of the longitudinal sides of the links (14), which deflector members (26) extend between an uppermost level of the support rollers (24) and a base level of the upper sides (17) of the carriers (16), and on at least one side of the support rollers (24), wherein the deflector members (26) of mutually facing longitudinal sides of mutually abutting links (14) engage into each other.

2. The conveyor belt (10) according to claim 1, in which the deflector members (26) are each formed by hook-shaped extensions (46), which extend into an area between adjacent links (14) and above the base level (19).

3. The conveyor belt (10) according to claim 1 or 2, in which the deflector members (26) are each anchored on the carrier (16) of a link (14).

4. The conveyor belt (10) according to one of the claims 1 to 3, in which the deflector members (26) are each provided with elevations on the backs of the hook-shaped extensions (46), which backs face upward toward the support rollers (24).

5. The conveyor belt (10) according to one of the claims 1 to 4, in which the deflector members (26) each have the same spacing distances as individual rollers (24).

6. The conveyor belt (10) according to one of the claims 1 to 5, in which the deflector members (26) each engage and/or project into spaces between adjacent rollers (24).

7. The conveyor belt (10) according to one of the claims 1 to 6, in which each link (14) has rows (22) of deflector elements (26) on both longitudinal sides.

8. The conveyor belt (10) according to one of the claims 1 to 7, in which each link (14) has two parallel rows (22) of rollers (24), which are in each case aligned to each other.

9. The conveyor belt (10) according to one of the claims 1 to 7, in which each link (14) has three parallel rows (22) of rollers (24), which are in each case aligned to each other.

10. The conveyor belt (10) according to one of the claims 1 to 9, which has a reverse bending radius (38) of a maximum of 250 millimetres, in particular, of less than 180 millimetres, and, particularly preferred, of less than 150 millimetres.

11. The conveyor belt (10) according to one of the previous claims, wherein the deflector members (26) on the mutually facing longitudinal sides of mutually abutting links (14) are anchored in alternating sequence on the respective mutually abutting links (14).

12. The conveyor belt (10) according to one of the claims 2 to 11, wherein the upward facing sides (28) of the hook-shaped deflector members (26) are convexly curved.

13. The conveyor belt (10) according to one of the previous claims, wherein the upper sides (28) of the deflector members (26), which are in each case arranged to be offset from one another and in an interengaging manner, form an approximately cylinder-segment-shaped contour.

## Revendications

1. Courroie transporteuse à maillons multiples (10) destinée à transporter des objets, tels que récipients, bouteilles, multipacks ou similaires, qui est constituée par une pluralité de maillons (14) qui sont reliés entre eux de façon articulée et dont chacun présente un support (16) allongé dont la face inférieure forme une section de support de la courroie transporteuse (10) et qui comprend, des deux côtés longitudinaux, des yeux d'articulation (18) parallèles pour la liaison par joint articulé à des maillons (14) adjacents, dans laquelle les yeux d'articulation (18) de maillons (14) respectivement adjacents reliés entre eux sont reliés par l'intermédiaire de respectivement au moins un boulon d'articulation (20) qui traverse les yeux d'articulation (18) des deux maillons (14) reliés entre eux, de telle sorte que les maillons (14) adjacents sont reliés à pivotement autour dudit au moins un boulon d'articulation (20), et dans laquelle chaque support (16) d'un maillon (14) comprend sur sa face supérieure au moins une rangée (22) de rouleaux d'appui (24) montés à rotation dont les axes de rotation sont situés parallèlement aux boulons d'articulation (20) et aux côtés longitudinaux des supports (16) des maillons (14) et qui forment conjointement avec lesdits rouleaux d'appui (24) des maillons (14) adjacents une surface d'appui pour les objets à transporter, **caractérisée par le fait que** des éléments déflecteurs (26) sont prévus au niveau des côtés longitudinaux des maillons (14), qui s'étendent entre un niveau le plus élevé des rouleaux d'appui (24) et un niveau de base des faces supérieures (17) des supports (16) et sur au moins un côté des rouleaux d'appui (24), dans laquelle les éléments déflecteurs (26) de côtés longitudinaux montrant les uns vers les autres de maillons (14) contigus les uns aux autres s'engageant les uns dans les autres.

2. Courroie transporteuse (10) selon la revendication 1, dans laquelle lesdits éléments déflecteurs (26) sont formés chacun par des rallonges (46) en forme de crochet qui s'étendent dans une zone située entre des maillons (14) adjacents et au-dessus du niveau de base (19).

3. Courroie transporteuse (10) selon la revendication 1 ou 2, dans laquelle les éléments déflecteurs (26) sont chacun ancrés sur le support (16) d'un maillon (14).

4. Courroie transporteuse (10) selon l'une quelconque des revendications 1 à 3, dans laquelle les éléments déflecteurs (26) sont chacun pourvus de saillies sur les faces arrière des rallonges (46) en forme de crochet, qui montrent vers le haut en direction des rouleaux d'appui (24).

5. Courroie transporteuse (10) selon l'une quelconque des revendications 1 à 4, dans laquelle les éléments déflecteurs (26) présentent chacun des espacements de pas identiques à ceux de rouleaux (24) individuels.

6. Courroie transporteuse (10) selon l'une quelconque des revendications 1 à 5, dans laquelle les éléments déflecteurs (26) s'engagent et/ou font saillie chacun dans des lacunes entre des rouleaux (24) adjacents.

7. Courroie transporteuse (10) selon l'une quelconque des revendications 1 à 6, dans laquelle chaque maillon (14) présente chacun, sur les deux côtés longitudinaux, des rangées (22) d'éléments déflecteurs (26).

8. Courroie transporteuse (10) selon l'une quelconque des revendications 1 à 7, dans laquelle chaque maillon (14) présente deux rangées (22) parallèles de galets de roulement (24) respectivement alignés entre eux.

9. Courroie transporteuse (10) selon l'une quelconque des revendications 1 à 7, dans laquelle chaque maillon (14) présente trois rangées (22) parallèles de galets de roulement (24) respectivement alignés entre eux.

10. Courroie transporteuse (10) selon l'une quelconque des revendications 1 à 9, qui présente un rayon de recourbure (38) de 250 millimètres au maximum, en particulier inférieur à 180, de manière particulièrement préférée inférieur à 150 millimètres.

11. Courroie transporteuse (10) selon l'une quelconque des revendications précédentes, dans laquelle les éléments déflecteurs (26) sur les côtés longitudinaux montrant les uns vers les autres de maillons (14) contigus les uns aux autres sont ancrés en un ordre alterné sur les maillons (14) respectivement adjacents.

12. Courroie transporteuse (10) selon l'une quelconque des revendications 2 à 11, dans laquelle les faces (28) dirigées vers le haut des éléments déflecteurs (26) en forme de crochet sont courbés de manière convexe.

13. Courroie transporteuse (10) selon l'une quelconque des revendications précédentes, dans laquelle les faces supérieures (28) des éléments déflecteurs (26) qui sont disposés de manière décalée les uns par rapport aux autres et s'engagent les uns dans les autres forment un contour qui est approximativement en forme de segment de cylindre.
